# EUROPÄISCHE PATENTSCHRIFT

(11) **EP 2 693 127 B1**
(45) Veröffentlichungstag und Bekanntmachung des Hinweises auf die Patenterteilung: **17.05.2017**
(21) Anmeldenummer: 13178870.5
(22) Anmeldetag: 01.08.2013
(51) Int. Cl.: G01G 19/56, H05B 6/12, H05B 6/06, F24C 7/08

(54) **System aufweisend eine Messeinrichtung**
System comprising a measurement device.
Système avec un dispositif de mesure

(30) Priorität: 03.08.2012 DE 102012213831
(43) Veröffentlichungstag der Anmeldung: 05.02.2014
(73) Patentinhaber: E.G.O. Elektro-Gerätebau GmbH, 75038 Oberderdingen (DE)
(72) Erfinder: Bechtold, Benigna, 75245 Neulingen (DE); Lang, Steffen, 75038 Oberderdingen (DE)
(74) Vertreter: Patentanwälte Ruff, Wilhelm, Beier, Dauster & Partner mbB

(56) Entgegenhaltungen:
- EP-A1- 1 074 823
- DE-A1- 10 344 337
- DE-A1-102005 052 274
- DE-A1-102008 044 236
- DE-U1-202011 052 235
- US-A1- 2003 206 572
- US-A1- 2010 299 074
- US-B1- 6 300 603

## Beschreibung

Die Erfindung betrifft ein System mit einer Messeinrichtung, die zwischen einer Oberfläche eines Kochfelds und einem Kochgefäß anordenbar ist.

Die DE 10 2005 052 274 A1, die DE 10 2008 044 236 A1 und die EP 1 074 823 A1 zeigen jeweils Kochfelder, in die Gewichtskraft-Messmittel integriert sind, die nicht frei auf dem Kochfeld verschiebbar und nicht vom Kochfeld entfernbar sind.

Die US 6,300,603 B1 offenbart einen ansteuerbaren Elektromagneten, der ein unbeabsichtigtes Verschieben bzw. Abnehmen eines ferromagnetischen Kochgefäßes während eines Kochvorgangs verhindert.

Die DE 20 2011 052 235 U1 zeigt eine Haushaltswaage.

Die US 2010/0299074 A1 zeigt Wagen, die über eine drahtlose Schnittstelle Daten zu einer zentralen Steuereinheit übertragen können.

Der Erfindung liegt die Aufgabe zugrunde, ein System zur Verfügung zu stellen, mittels dem die Funktionsvielfalt eines Kochfelds erweitert werden kann.

Die Erfindung löst diese Aufgabe durch ein System nach Anspruch 1.

Das System weist ein Kochfeld auf, wobei das Kochfeld umfasst: eine Kochfeldoberfläche, beispielsweise eine Glaskeramikoberfläche, mindestens eine Kochstelle, mindestens eine Induktionsheizeinrichtung, die der Kochstelle zugeordnet ist, und eine Steuereinrichtung zur Funktionssteuerung des Kochfelds. Die Funktionssteuerung kann die geeignete Ansteuerung der Induktionsheizeinrichtung, unterschiedliche Heizprogramme, eine Timer-Steuerung, eine Temperaturregelung usw. implementieren. Das System weist weiter ein induktiv beheizbares Kochgefäß und eine Messeinrichtung auf.

Die Messeinrichtung, mittels der mindestens eine Messgröße bestimmbar ist, ist zwischen der Kochfeldoberfläche und dem Kochgefäß, beispielsweise einem Kochtopf, anordenbar. Im bestimmungsgemäßen Gebrauch der Messeinrichtung wird diese zwischen Kochgefäß und Kochfeldoberfläche sandwichartig eingebracht bzw. angeordnet. Hierzu kann die Messeinrichtung auf die Oberfläche des Kochfelds aufgesetzt werden, wobei das Kochgefäß auf die Messeinrichtung aufgesetzt wird.

Die Messeinrichtung ist bevorzugt vom Kochfeld getrennt vorgesehen, d.h. ist nicht integrierter bzw. integraler Bestandteil des Kochfelds.

Die Messeinrichtung ist frei auf dem Kochfeld verschiebbar und vom Kochfeld entfernbar.

Die Messeinrichtung weist Gewichtskraft-Messmittel auf, die dazu ausgebildet sind, eine Messgröße in Form einer Gewichtskraft zu bestimmen, die von dem Kochgefäß (und selbstverständlich Kochgut, das sich gegebenenfalls im Kochgefäß befindet) bewirkt wird, das auf der Messeinrichtung angeordnet ist. Die bestimmte Gewichtskraft kann beispielweise zum Wiegen von Zutaten/Kochgut ausgewertet werden, die/das in das Kochgefäß eingebracht werden/wird. Die Messeinrichtung kann eine Umwandlungseinrichtung aufweisen, die die bestimmte Gewichtskraft in eine entsprechende Maßangabe umwandelt. Es besteht selbstverständlich die Möglichkeit, dass in diesem Kontext ein Nullabgleich möglich/vorgesehen ist, so dass die Gewichtskraft des Kochgefäßes herausgerechnet wird.

Die Messeinrichtung kann einen eigenen Betriebsenergiespeicher, beispielsweise in Form eines Akkumulators aufweisen. Alternativ oder zusätzlich kann die Messeinrichtung ihre Betriebsenergie auch aus einem magnetischen Wechselfeld erzeugen, welches im Heizbetrieb mittels des Induktionskochfelds erzeugt wird.

Die Messeinrichtung ist dazu ausgebildet, beispielsweise aufgrund ihrer Materialeigenschaften, Dicke, Form und/oder Temperaturfestigkeit, während einer Erwärmung des Kochgefäßes mittels des Kochfelds zwischen der Oberfläche des Kochfelds und dem Kochgefäß angeordnet zu bleiben.

Die Gewichtskraft-Messmittel können mindestens eine Wägezelle, mindestens einen piezoelektrischen Drucksensor und/oder mindestens einen kapazitiven Drucksensor aufweisen.

Die Temperatur-Messmittel können dazu ausgebildet sein, eine weitere Messgröße in Form einer Temperatur eines Bodens des Kochgefäßes zu bestimmen, das auf der Messeinrichtung angeordnet ist. Die Temperatur-Messmittel können mehrere, beispielsweise zwei oder drei, Temperatursensoren umfassen, die beispielsweise gleichmäßig auf einem Kreisbogen verteilt sind, wobei der Kreisbogen einen Radius aufweisen kann, der beispielsweise der Hälfte eines Radius einer kreisförmigen Kochstelle entspricht.

Die Messeinrichtung weist Datenübertragungsmittel auf, die dazu ausgebildet sind, die Messgrößen, d.h. die bestimmte Gewichtskraft und/oder die bestimmte Temperatur, drahtlos zu der Steuereinrichtung des Kochfelds zu übertragen.

Die Messeinrichtung kann Anzeigemittel umfassen, die dazu ausgebildet sind, die Messgrößen anzuzeigen.

Die Messeinrichtung kann Bedienmittel aufweisen, die dazu ausgebildet sind, Betriebsparameter für die Messeinrichtung selbst und/oder das Kochfeld einzugeben.

Die Messeinrichtung weist Befestigungsmittel auf, die dazu ausgebildet sind, die Messeinrichtung lösbar an dem Boden des Kochgefäßes zu befestigen, insbesondere derart, dass bei einem Abheben des Kochgefäßes von der Oberfläche des Kochfelds auch die Messeinrichtung mit abgehoben wird.

Die Befestigungsmittel können mindestens einen Magneten aufweisen.

Die Messeinrichtung kann eine, beispielsweise gleichmäßige, Dicke zwischen 2mm und 10mm aufweisen, so dass für den Fall von Induktionskochfeldern keine störende Schwächung der erzeugten magnetischen Wechselfelder verursacht wird.

Die Messeinrichtung besteht aus Materialien, die nicht durch die Induktionsheizeinrichtung erwärmbar sind. In der Regel sind dies nichtferromagnetische Materialien, beispielsweise Kunststoffe, Silikon, usw.

Die Steuereinrichtung kann dazu ausgebildet sein, die Funktionssteuerung in Abhängigkeit von der mittels der Messeinrichtung bestimmten Temperatur und/oder der mittels der Messeinrichtung bestimmten Gewichtskraft durchzuführen, sodass beispielsweise vorgegebene Temperaturprofile gefahren werden können, eine exakte Regelung der Topfbodentemperatur möglich wird, ein mengenabhängiger Kochprozeß durchgeführt wird, usw.

Die Erfindung wird nachfolgend unter Bezugnahme auf die Zeichnungen beschrieben. Hierbei zeigt schematisch:
- Fig. 1: ein System mit einem Induktionskochfeld, einem induktiv beheizbaren Kochgefäß und einer erfindungsgemäßem Messeinrichtung, die in einer Sandwichkonfiguration zwischen einer Glaskeramikoberfläche des Kochfelds und dem Kochgefäß angeordnet ist, und
- Fig. 2: eine detailliertere Darstellung der in Fig. 1 gezeigten Messeinrichtung.

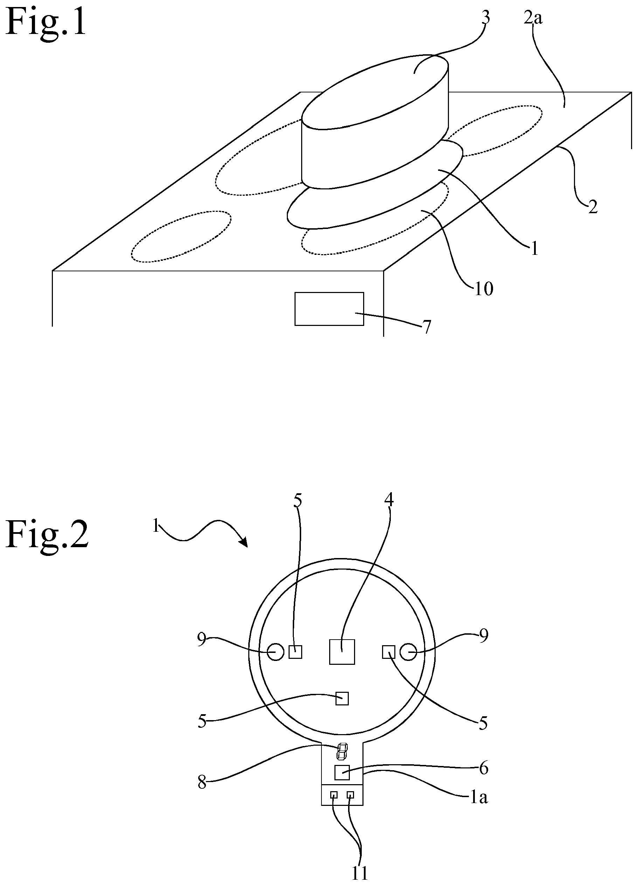

Fig. 1 zeigt ein System mit einem Induktionskochfeld 2, einem herkömmlichen Kochgefäß 3 mit einem induktiv beheizbaren, ferromagnetischen Boden und einer erfindungsgemäßen Messeinrichtung 1, die beim bestimmungsgemäßen Gebrauch in einer Sandwichkonfiguration zwischen einer Glaskeramikoberfläche 2a des Kochfelds 2 und dem Kochgefäß 3 angeordnet ist.

Das Induktionskochfeld 2 weist herkömmlich mindestens eine kreisförmige Kochstelle 10 auf, der eine herkömmliche, nicht dargestellte Induktionsheizeinrichtung zugeordnet ist.

Eine Steuereinrichtung 7, beispielsweise in Form eines Mikroprozessors, dient der Funktionssteuerung des Induktionskochfelds 2. Die Steuereinrichtung 7 kann beispielsweise die geeignete Ansteuerung der Induktionsheizeinrichtung, unterschiedliche Heizprogramme, eine Timer-Steuerung, eine Temperaturregelung usw. implementieren.

Beim bestimmungsgemäßen Gebrauch wird die scheibenförmige oder bierdeckelförmige Messeinrichtung 1 auf der Kochstelle 10 des Induktionskochfelds 2 angeordnet und das Kochgefäß 3 auf die Messeinrichtung 1 gestellt. Falls die Messeinrichtung 1 Befestigungsmittel (siehe auch die nachfolgenden Ausführungen zu Fig. 2) aufweist, kann die Messeinrichtung 1 lösbar am Boden des Kochgefäßes 3 befestigt werden, so dass die Kombination aus Messeinrichtung 1 und Kochgefäß 3 auf der Kochstelle 10 angeordnet werden kann.

Fig. 2 zeigt eine detailliertere Darstellung der in Fig. 1 gezeigten scheibenförmigen Messeinrichtung 1.

Die scheibenförmige Messeinrichtung 1 kann passend zu gängigen Kochgefäßtypen und/oder Kochgefäßgrößen einen im Wesentlichen kreisförmigen Innenbereich aufweisen, beispielsweise mit einem Durchmesser von 150mm, 180mm, 210mm oder 260mm. Selbstverständlich sind auch andere Formen möglich. Die Messeinrichtung 1 ist lediglich derart zu formen, dass das Kochgefäß 3 sicher auf ihr abstellbar ist.

Die Messeinrichtung 1 weist einen Vorsprung 1 a auf, der an den kreisförmigen Innenbereich angrenzt und der beim bestimmungsgemäßen Gebrauch nicht von dem Kochgefäß 3 überdeckt ist.

Im Vorsprung 1 a sind sämtliche temperaturempfindlichen Bauelemente der Messeinrichtung angeordnet, beispielsweise ein Mikroprozessor, analoge und digitale Peripherie des Mikroprozessors, ein drahtloser Sender/Empfänger-Baustein, usw.

Die Messeinrichtung 1 kann eine gleichbleibende oder maximale Dicke zwischen 2mm und 10mm aufweisen, so dass für den Fall von Induktionskochfeldern keine störende Schwächung der erzeugten magnetischen Wechselfelder verursacht wird.

Die Messeinrichtung 1 besteht aus Materialien, die im Wesentlichen nicht durch die Induktionsheizeinrichtung erwärmbar sind. In der Regel sind dies nicht ferromagnetische Materialien, beispielsweise Kunststoffe, Silikon, usw.

Die Messeinrichtung 1 weist Gewichtskraft-Messmittel 4, beispielsweise in Form von einer oder mehreren Wägezellen, auf, die dazu ausgebildet sind, eine Gewichtskraft zu bestimmen, die von dem Kochgefäß 3 inklusive eventuell vorhandenem Kochgefäß-Inhalt bewirkt und auf die Messeinrichtung 1 bzw. deren Gewichtskraft-Messmittel 4 ausgeübt wird.

Weiter weist die Messeinrichtung 1 Temperatur-Messmittel, hier in Form von drei Temperatursensoren 5 auf, die dazu ausgebildet sind, eine Temperatur des Kochgefäßbodens zu bestimmen. Die Temperatursensoren 5 sind gleichmäßig auf einem Kreisbogen verteilt, wobei der Kreisbogen einen Radius aufweist, der der Hälfte eines Radius der kreisförmigen Kochstelle 10 entspricht.

Die Messeinrichtung 1 weist Datenübertragungsmittel 6 auf, die dazu ausgebildet sind, die Messgrößen, d.h. die bestimmte Gewichtskraft und die bestimmte Temperatur, drahtlos zu der Steuereinrichtung 7 des Kochfelds 2 zu übertragen, wobei das Kochfeld 2 bzw. dessen Steuereinrichtung 7 korrespondierende, nicht gezeigte Datenübertragungsmittel aufweist. Die Art der Datenübertragung sowie die Datenübertragungsmittel sind beispielsweise wie in der DE 10 2011 079 689 offenbart ausgestaltet, wobei die DE 10 2011 079 689 durch Bezugnahme zum Inhalt der Beschreibung gemacht wird. Es versteht sich, dass auch weitere, herkömmliche Datenübertragungsmittel und Datenübertragungsstandards zur Datenübertragung verwendet werden können, beispielsweise Bluetooth, WLAN, ISO 1444, usw.

Die Messeinrichtung 1 weist Anzeigemittel in Form einer 7-Segment-Anzeige 8 auf, die dazu ausgebildet ist, die Messgrößen anzuzeigen. Es versteht sich, dass auch mehrere 7-Segment-Anzeigen vorgesehen sein können. Anstelle einer 7-Segment-Anzeige können auch andere Anzeigemittel vorgesehen sein, beispielsweise LCD-Anzeigen, usw. Die Messgrößen können im Zeitmultiplex angezeigt werden.

Die Messeinrichtung 1 kann Bedienmittel 11, beispielsweise in Form von kapazitiven Tasten, aufweisen, die dazu ausgebildet sind, Betriebsparameter für die Messeinrichtung 1 selbst und/oder das Kochfeld 2 einzugeben. Bei einer Betriebsparametereinstellung kann eine Visualisierung der Betriebsparameter mittels der Anzeigemittel 8 erfolgen.

Die Messeinrichtung 1 weist magnetische Befestigungsmittel 9 auf, die dazu ausgebildet sind, die Messeinrichtung 1 lösbar an dem Boden des ferromagnetischen Kochgefäßes 3 zu befestigen.

Die Steuereinrichtung 7 ist dazu ausgebildet, die Funktionssteuerung in Abhängigkeit von der mittels der Messeinrichtung 1 bestimmten Temperatur und/oder der mittels der Messeinrichtung 1 bestimmten Gewichtskraft durchzuführen, sodass beispielsweise vorgegebene Temperaturprofile gefahren werden können, eine exakte Regelung der Topfbodentemperatur möglich wird, usw.

Erfindungsgemäß ermöglicht die Einheit bzw. Messeinrichtung 1 neben einer exakten Temperaturmessung auch eine Wiegefunktion auf Induktionskochfeldern, unabhängig vom Induktionskochfeld und unabhängig vom Kochgefäß bzw. Topf.

Eine in die Messeinrichtung 1 integrierte, optionale Anzeige- und Bedieneinrichtung 8/11 ermöglicht ein komfortables Ablesen der Messgrößen und eine komfortable Eingabe von Parametern. Alternativ oder zusätzlich können die Messwerte, da sie drahtlos zum Induktionskochfeld 2 übertragen werden, auch mittels einer Anzeige des Induktionskochfelds 2 visualisiert werden. Entsprechend kann eine Parametrierung auch mittels einer Bedieneinrichtung des Induktionskochfelds 2 erfolgen, wobei die Parameter dann drahtlos zur Messeinrichtung 1 übertragen werden.

Die Temperaturmessung ermöglicht es auf vordefinierte Temperaturen zu erwärmen bzw. nach Temperaturprofilen zu kochen.

Die Wiegefunktion kann das Kochen dadurch unterstützen, dass Zutaten direkt beim Zugegeben abgewogen werden können, sowohl während des Kochprozesses als auch unabhängig von einem Kochprozess, ohne dass hierzu eine dedizierte Waage vorzusehen wäre.

Mittels der Messeinrichtung 1 können basierend auf der bestimmten Gewichtskraft und einer eventuell vorgenommenen Nullung, um die Gewichtskraft des Kochgefäßes herauszurechnen, Volumen von Flüssigkeiten beispielsweise in Liter angeben und/oder Massen von Feststoffen beispielsweise in Gramm angegeben werden.

Beim Wiegen kann beispielweise ein Anzeigen von zugegebenem Gewicht erfolgen. Weiter kann eine Tara-Funktion realisiert sein. Weiter kann ein gewünschtes Gewicht voreingestellt werden und in Folge angezeigt werden, wie viel Gewicht noch zuzugeben ist.

Die bestimmte Temperatur und/oder die bestimmte Gewichtskraft bzw. das entsprechende Gewicht kann/können optisch ausgegeben werden, beispielsweise mittels LED, 7-Sgement-Anzeigen, usw. Es ist auch eine akustische Ausgabe mittels Lautsprecher oder Summer möglich.

Zur Eingabe von Parametern können Tasten, Slider, ein Touch-Screen usw. an der Messeinrichtung 1 vorgesehen sein. Denkbar ist auch eine Spracherkennung zur Spracheingabe der Parameter.

## Patentansprüche

1. System, aufweisend:
- ein Kochfeld (2) mit
- einer Kochfeldoberfläche (2a),
- mindestens einer Kochstelle (10),
- mindestens einer Induktionsheizeinrichtung, die der Kochstelle (10) zugeordnet ist, und
- einer Steuereinrichtung (7) zur Funktionssteuerung des Kochfelds (2),
- ein induktiv beheizbares Kochgefäß (3) und
- eine Messeinrichtung (1), die zwischen der Kochfeldoberfläche (2a) des Kochfelds (2) und dem Kochgefäß (3) anordenbar ist, die frei auf dem Kochfeld (2) verschiebbar ist und die vom Kochfeld (2) entfernbar ist, aufweisend:
- Gewichtskraft-Messmittel (4), die dazu ausgebildet sind, eine Gewichtskraft zu bestimmen, die von dem Kochgefäß (3) bewirkt wird, das auf der Messeinrichtung (1) angeordnet ist,
- Datenübertragungsmittel (6), die dazu ausgebildet sind, die bestimmte Gewichtskraft drahtlos zu der Steuereinrichtung (7) des Kochfelds (2) zu übertragen, und
- Befestigungsmittel (9), die dazu ausgebildet sind, die Messeinrichtung (1) lösbar an dem Boden des Kochgefäßes (3) zu befestigen.

2. System nach Anspruch 1, **dadurch gekennzeichnet dass**
- die Messeinrichtung (1) dazu ausgebildet ist, während einer Erwärmung des Kochgefäßes (3) mittels des Kochfelds (2) zwischen der Kochfeldoberfläche (2a) und dem Kochgefäß (3) angeordnet zu bleiben.

3. System nach Anspruch 1 oder 2, **dadurch gekennzeichnet dass**
- die Gewichtskraft-Messmittel (4) mindestens eine Wägezelle, mindestens einen piezoelektrischen Drucksensor und/oder mindestens einen kapazitiven Drucksensor aufweisen.

4. System nach einem der vorhergehenden Ansprüche, **gekennzeichnet durch**
- Temperatur-Messmittel (5), die dazu ausgebildet sind, eine Temperatur eines Bodens des Kochgefäßes (3) zu bestimmen, das auf der Messeinrichtung (1) angeordnet ist.

5. System nach Anspruch 4, **dadurch gekennzeichnet, dass**
- die Datenübertragungsmittel (6) dazu ausgebildet sind, die bestimmte Temperatur drahtlos zu der Steuereinrichtung (7) des Kochfelds (2) zu übertragen.

6. System nach einem der vorhergehenden Ansprüche, **gekennzeichnet durch**
- Anzeigemittel (8), die dazu ausgebildet sind, die bestimmte Gewichtskraft anzuzeigen, und/oder
- Bedienmittel, die dazu ausgebildet sind, Betriebsparameter für die Messeinrichtung und/oder das Kochfeld (2) einzugeben.

7. System nach einem der vorhergehenden Ansprüche, **dadurch gekennzeichnet, dass**
- die Befestigungsmittel mindestens einen Magneten (9) aufweisen.

8. System nach einem der vorhergehenden Ansprüche, **dadurch gekennzeichnet, dass**
- die Messeinrichtung (1) eine Dicke zwischen 2mm und 10mm aufweist.

9. System nach einem der vorhergehenden Ansprüche, **dadurch gekennzeichnet, dass**
- die Steuereinrichtung (7) dazu ausgebildet ist, die Funktionssteuerung in Abhängigkeit von der mittels der Messeinrichtung (1) bestimmten Gewichtskraft durchzuführen.

## Claims

1. System, comprising:
- a cooktop (2), comprising:
- a cooktop surface (2a),
- at least one cooking area (10),
- at least one induction heating device associated with the cooking area (10), and
- a control device (7) for function control of the cooktop (2),
- an inductively heatable cooking vessel (3), and
- a measuring device (1) arrangeable between the cooktop surface (2a) of the cooktop (2) and the cooking vessel (3), which measuring device is freely movable on the cooktop (2) and is removable from the cooktop (2), comprising:
- weight measuring means (4) configured to determine a weight caused by the cooking vessel (3) disposed on the measuring device (1),
- data transmission means (6) configured to transmit the determined weight to the control device (7) of the cooktop (2) in a wireless way, and
- fixation means (9) configured to fix the measuring device (1) removably on the bottom of the cooking vessel (3).

2. System according to claim 1, **characterized in that**
- the measuring device (1) is configured to remain arranged between the cooktop surface (2a) and the cooking vessel (3) during a heating procedure of the cooking vessel (3) using the cooktop (2).

3. System according to claim 1 or 2, **characterized in that**
- the weight measuring means (4) include at least one weighing cell, at least one piezoelectric pressure sensor and/or at least one capacitive pressure sensor.

4. System according to any of the preceding claims, **characterized by**
- temperature measuring means (5) configured to determine a temperature of a bottom of the cooking vessel (3) disposed on the measuring device (1).

5. System according to claim 4, **characterized in that**
- the data transmission means (6) are configured to transmit the determined temperature to the control device (7) of the cooktop (2) in a wireless way.

6. System according to any of the preceding claims, **characterized by**
- display means (8) configured to display the determined weight, and/or
- operating means configured to input operating parameters for the measuring device and/or the cooktop (2).

7. System according to any of the preceding claims, **characterized in that**
- the fixation means include at least one magnet (9).

8. System according to any of the preceding claims, **characterized in that**
- the measuring device (1) has a thickness between 2 mm and 10 mm.

9. System according to any of the preceding claims, **characterized in that**
- the control device (7) is configured to perform the function control in response to the weight determined using the measuring device (1).

## Revendications

1. Système présentant :
- un plan de cuisson (2) avec
- une surface (2a) de plan de cuisson,
- au moins un emplacement de cuisson (10),
- au moins un dispositif de chauffage par induction associé à l'emplacement de cuisson (10),
- un dispositif de commande (7) qui commande le fonctionnement du plan de cuisson (2),
- un récipient de cuisson (3) apte à être chauffé par induction et
- un dispositif de mesure (1) qui peut être disposé entre la surface (2a) du plan de cuisson (2) et le récipient de cuisson (3), qui peut coulisser librement sur le plan de cuisson (2), qui peut être retiré du plan de cuisson (2) et présentant :
- des moyens (4) de mesure de la force du poids configurés pour déterminer la force du poids exercée par le récipient de cuisson (3) disposé sur le dispositif de mesure (1),
- des moyens (6) de transfert de données configurés pour transmettre sans fil au dispositif de commande (7) du plan de cuisson (2) la force du poids qui a été déterminée et
- des moyens de fixation (9) configurés pour fixer de manière libérable le dispositif de mesure (1) sur le fond du récipient de cuisson (3).

2. Système selon la revendication 1, **caractérisé en ce que** le dispositif de mesure (1) est configuré pour rester disposé entre la surface (2a) du plan de cuisson et le récipient de cuisson (3) pendant une chauffage du récipient de cuisson (3) au moyen du plan de cuisson (2).

3. Système selon les revendications 1 ou 2, **caractérisé en ce que** les moyens (4) de mesure de la force du poids présentent au moins une cellule de pesée, au moins un capteur piézoélectrique de pression et/ou au moins un capteur capacitif de pression.

4. Système selon l'une des revendications précédentes, **caractérisé par** des moyens (5) de mesure de température configurés pour déterminer une température du fond du récipient de cuisson (3) disposé sur le dispositif de mesure (1).

5. Système selon la revendication 4, **caractérisé en ce que** les moyens (6) de transfert de données sont configurés pour transférer sans fil au dispositif de commande (7) du plan de cuisson (2) la température qui a été déterminée.

6. Système selon l'une des revendications précédentes, **caractérisé par** des moyens d'affichage (8) configurés pour afficher la force du poids qui été déterminée et/ou des moyens de commande configurés pour entrer des paramètres de fonctionnement du dispositif de mesure et/ou du plan de cuisson (2).

7. Système selon l'une des revendications précédentes, **caractérisé en ce que** les moyens de fixation présentent au moins un aimant (9).

8. Système selon l'une des revendications précédentes, **caractérisé en ce que** le dispositif de mesure (1) présente une épaisseur comprise entre 2 mm et 10 mm.

9. Système selon l'une des revendications précédentes, **caractérisé en ce que** le dispositif de commande (7) est configuré pour réaliser la commande du fonctionnement en fonction de la force du poids qui a été déterminée au moyen du dispositif de mesure (1).
